# EUROPEAN PATENT APPLICATION

(11) **EP 1 755 312 A1**
(43) Date of publication of application: **21.02.2007**
(21) Application number: 06012807.1
(22) Date of filing: 22.06.2006
(51) Int. Cl.: H04L 29/08

(54) **Communication system and method for providing presence-enhanced name tags**

(30) Priority: 16.08.2005 US 204698
(71) Applicant: Alcatel, 75008 Paris (FR)
(72) Inventor: Wu, Fuming, 75035 Frisco TX (US); Vaidya, Mihir, 98052 Redmond WA (US)
(74) Representative: Schäfer, Wolfgang

(57) **Abstract**

A presence-enhanced smart name tag is implemented on a local application of a device (120). The local application identifies as a smart name tag a string of characters representing an identity of a presentity (110). The presentity identity is used to retrieve presence information indicating the availability of the presentity (110).

## Description

### BACKGROUND OF THE INVENTION

### Technical Field of the Invention

The present invention relates in general to presence-based communication systems, and in particular, to enhancing smart tags with presence information.

### Description of Related Art

Smart tags are now available in web browsers and web-based on-line publishing applications, such as digital books, magazines and newspapers. The smart tag feature enables the owner of a web page or the writer of a digital publication to tag objects in the web page or publication, and add additional information related to the tagged object in the form of on-line notes and/or links. Readers of the web page or digital publication can access the additional information by hovering over the tagged object or right clicking the tagged object. In some cases, a web page owner or digital publisher may further provide the reader with the ability to add notes to the published material for the purpose of on-line discussion. When viewing the published material, the reader can choose either a pristine copy or a copy with reader's notes.

Recent advances have extended the smart tag functionality to recognize name strings within documents or web pages to further facilitate on-line collaboration. Such a smart name tag feature operates using software that is capable of recognizing a string of characters in a document as a name (e.g., a name of an author of the document or co-worker mentioned in the document). The smart name tags themselves are indicators embedded in the documents that can be used to generate an e-mail, establish a real-time communication session using certain media types (e.g., IM or voice) or start a web discussion with the author/co-worker.

However, existing applications that incorporate the smart name tag feature utilize special software to recognize a string of characters as a name. A user is not able to manually identify a string as a name. As a result, the feature is limited to only those persons whose names are detected by the application. In addition, the smart name tag feature is only available for names that match a contact in the user's local contact list, and whose network address information (e.g., e-mail address) is included in the contact information. Existing applications are not capable of determining a network address of a person using only the person's name. Thus, a smart name tag will appear only if the author/co-worker's name is identified by the application, and the identified name matches a contact in the user's local contact list.

Furthermore, existing applications that incorporate the smart name tag feature are local applications that interface with other local applications (e.g., an e-mail application, multimedia application or voice application) to facilitate contact with the author/co-worker. These applications are unable to directly communicate with a presence server (such as Microsoft Live Communication Server@, IBM Sametime Server@) or an e-mail/calendar server (such as Microsoft Exchange Server@ or IBM Domino Server@) to establish contact with the author/co-worker. For example, these applications currently do not provide the user with additional information on the availability (presence) of the person to engage in a real-time communication session or web discussion. As a result, attempts to initiate communication sessions with the author/co-worker may fail.

Therefore, what is needed is a mechanism for enhancing smart name tags with presence information identifying the availability of the author/co-worker. In addition, what is needed is a mechanism for manually identifying strings as names. Furthermore, what is needed is a mechanism for determining a network address associated with a name tag to facilitate communication with the author/co-worker identified by the smart name tag.

### SUMMARY OF THE INVENTION

Embodiments of the present invention provide a device for providing a presence-enhanced smart name tag. The device includes a local application and a communication manager. The local application is capable of identifying a string of characters as a smart name tag, in which the string of characters represents an identity of a presentity. The local application is further operable to generate a request for presence information indicating availability of the presentity. The communication manager is operable to detect launch of the local application, retrieve the presence information of the presentity from a presence system and provide the presence information to the local application.

In one embodiment, the communication manager is further operable to query a directory with the identity of the presentity to retrieve a network address for the presentity. The communication manager uses the network address to retrieve the presence information of the presentity from the presence system. In a further embodiment, the communication manager is further operable to establish a communication session with the presentity using the presence information.

In another embodiment, the local application is capable of automatically identifying the string of characters as a smart name tag. In yet another embodiment, the local application is capable of receiving a manual command to identify the string of characters as a smart name tag.

Embodiments of the present invention further provide a communication system for providing a presence-enhanced smart name tag. The communication system includes a device and a presence server. The presence server collects and stores presence information on a plurality of presentities. The presence information indicates availability of the presentities. The device runs a local application configured to identify a string of characters as a smart name tag, in which the string of characters represents an identity of a select presentity. In addition, the device generates a request for presence information of the select presentity to the presence server. The presence server provides the presence information of the select presentity to the device.

In one embodiment, the presence server further maintains preference information for each of the presentities for use in filtering the presence information of the select presentity provided to the device.

Embodiments of the present invention further provide a method for providing a presence-enhanced smart name tag. The method includes detecting launch of a local application running on a device, receiving a request for presence information of a presentity identified as a smart name tag by the local application and requesting presence information of the presentity, in which the presence information indicates availability of the presentity. The method further includes receiving the presence information of the presentity and providing the presence information of the presentity to the local application.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system in accordance with embodiments of the present invention;
FIGURE 2 illustrates an exemplary communications environment for providing a presence-enhanced smart name tag, in accordance with embodiments of the present invention;
FIGURE 3 is a flowchart illustrating an exemplary process for providing a presence-enhanced smart name tag, in accordance with embodiments of the present invention;
FIGURE 4 illustrates an exemplary device for providing a presence-enhanced smart name tag, in accordance with embodiments of the present invention;
FIGURE 5 illustrates an exemplary communication system for implementing a presence-enhanced smart name tag, in accordance with embodiments of the present invention; and
FIGURE 6 is a signal flow diagram illustrating an exemplary communication session flow using a presence-enhanced smart name tag, in accordance with embodiments of the present invention.

### DETAILED DESCRIPTION OF THE DRAWINGS

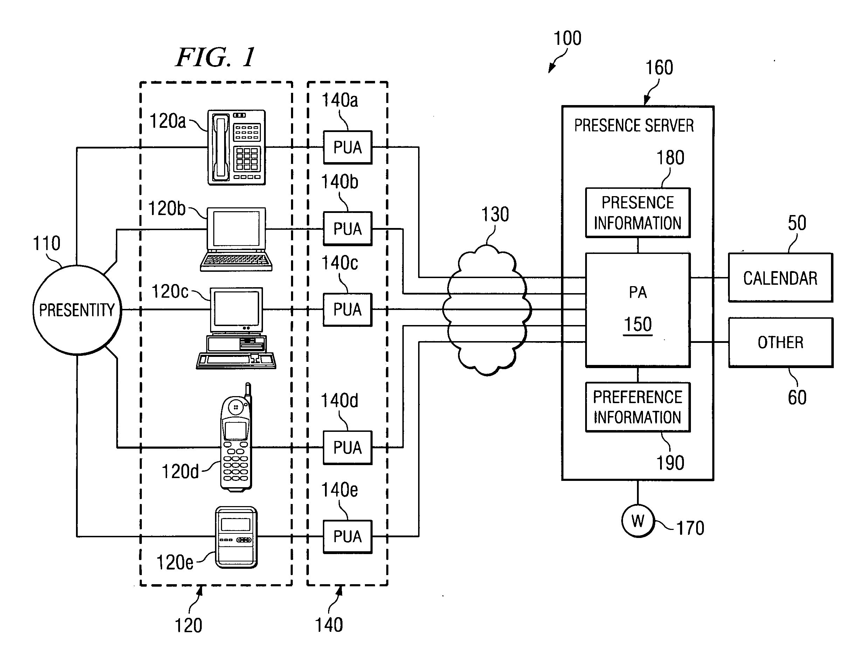

Referring to FIGURE 1, there is illustrated an exemplary presence system 100 capable of implementing various embodiments of the present invention. The presence system 100 includes a presentity 110 and one or more devices 120 associated with the presentity 110. The presentity 110 represents the callee and provides presence information on the callee's presence status to the presence system 100. The presentity 110 can be a person or any physically or logically existing networked object (e.g., a group of people, a networked printer, a networked copy machine or a networked projector in a conference room).

Each device 120 is a physical communications device capable of sending and/or receiving communications over a communications network 130. Examples of such devices 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing presence information for the presentity 110. In FIGURE 1, a separate PUA 140 is shown for each device 120. However, it should be understood that in other embodiments, the number of PUAs 140 can vary based on the number and type of devices 120, the applications supported by the devices 120 and the system configuration. Each PUA 140 independently generates a component of the overall presence information for a presentity 110. Typically, PUA 140 generates presence information when a change in presence status occurs. Examples of changes in presence status include, but are not limited to, turning on and off a device 120, modifying the registration from a device 120 and changing the instant messaging status on a device 120. As an example, when a presentity initiates or answers a phone call, the telephone application notifies the presence server to set the presentity's presence status to "On the Phone."

The presence information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110. In addition, the PA 150 collects presence information from a calendar/scheduler application 50 (e.g., Microsoft Exchange Server®, IBM Lotus Notes® or other similar application) and other sources 60 of presence information (e.g., an instant messaging application). For example, if a presentity has a meeting scheduled on his or her calendar from 10:00 a.m. to 12:00 p.m., at 10:00 a.m., the calendar/scheduler application 50 notifies the PA 150 to set the presentity's presence status to "In a Meeting."

The PA 150 aggregates the presence information from each of the sources (e.g., PUA's 140, calendar 50 and other sources 60) and maintains the current complete presence information for the presentity 110. The presence information 180 indicates, for example, the availability of the presentity, the current activity of the presentity, the local time where the presentity is located, the current location of the presentity and the current status of the active devices and/or applications running on active devices. The PA 150 is further operable to provide the presence information to one or more watchers 170 (callers or communication session initiators) who have subscribed to the presence service of the presentity 110.

The presence server 160 is a physical entity that can operate as either the PA 150 or as a proxy server for routing requests from watchers 170 to the PA 150. The presence server 160 stores the presence information 180 and preference information 190 for a plurality of presentities 110. Thus, the PA 150, in combination with the presence server 160, is operable to receive presence information of the presentity 110 from the PUAs 140, receive requests from watchers 170 for the presence information and provide the presence information to the watcher(s) 170. When acting as a PA 150, the presence server 160 can also be co-located with a PUA 140.

The presence server 160 further stores preference information 190 (e.g., terminal preferences) for the presentities 110 and watchers 170 of the presence system 100. For example, the preference information 190 can include both presentity preference information (e.g., privacy filters) set by the presentity 110 for each watcher 170 and watcher preference information (e.g., watcher filters) set by each watcher 170 for presentities 110. The preference information 190 operates to filter the presence information 180 of a presentity 110 provided to a watcher 170 to accommodate privacy concerns, prioritization requirements, administrator policies and security considerations.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

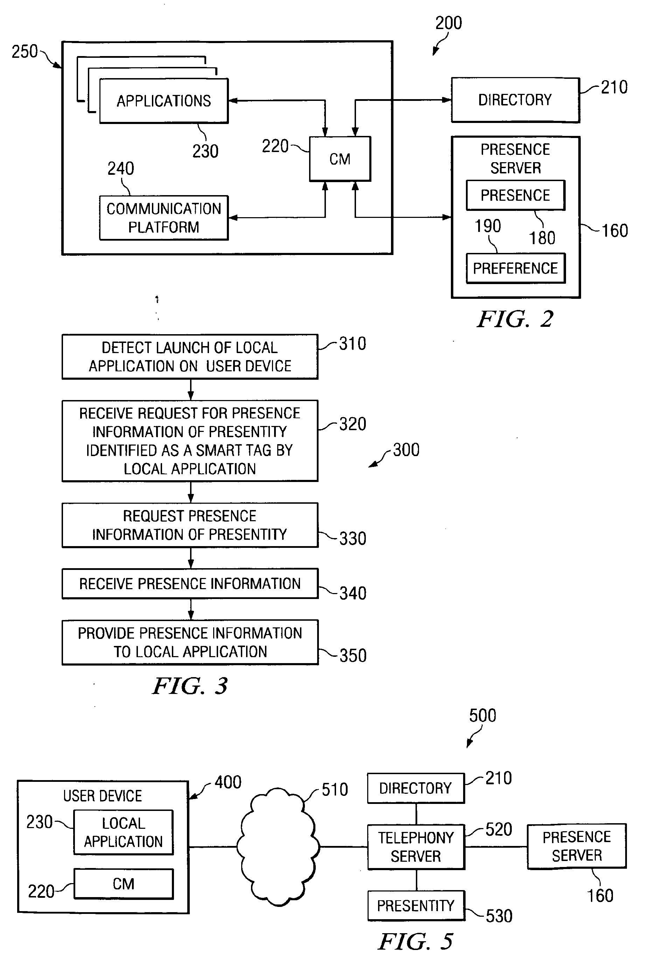

Referring now to FIGURE 2, there is illustrated an exemplary communications environment 200 for providing a presence-enhanced smart name tag, in accordance with embodiments of the present invention. The communications environment 200 includes a user environment 250, a directory 210 and the presence server 160. The user environment 250 represents one or more user devices (e.g., devices 120 shown in FIG. 1) associated with a user, and includes a communication manager (CM) 220, one or more local applications 230 running on one or more user devices and communication platforms 240 for executing both real time and non-real time communication sessions on one or more of the devices. The local applications 230 are document applications. Examples of document applications include, but are not limited to, web browsers, word processing applications, conferencing and scheduling applications, and other document editing/viewing applications.

The CM 220 is the central control unit of the user environment 250 and runs locally on one or more devices of the user environment 250. In an exemplary embodiment, the CM 220 is designed as a SIP user agent that supports both event services and rich presence services. Thus, the CM 220 is equipped with the capability to detect local event occurrences and to capture relevant information of the events. One example of a local event is the launch of one of the local applications 230.

In another exemplary embodiment, the CM 220 operates as a "virtual" presence agent to manipulate rich presence information for the user. As a result, the CM 220 is further equipped with the capability to automatically send presence subscription and unsubscription requests to the presence server 160. In addition, the CM 220 is operable to publish the launch of a local application 230 to the presence server 160 or any other change in presence status of the user. Furthermore, the CM 220 is equipped with the capability to access to the user's profile of media (including device functionality and the corresponding device addresses) and the user's communication preferences (per media and per device).

Each local application 230 is configured to identify a string of characters as a smart name tag, in which the string of characters represents an identity of a presentity. For example, in one embodiment, one or more of the local applications 230 are configured to automatically recognize a particular string of characters as a smart name tag. In another embodiment, one or more of the local applications 230 are configured to receive a manual command from the user requesting that the local application 230 identify a highlighted or otherwise identified string of characters as a smart name tag. Each local application 230 is further operable to generate a request for presence information indicating availability of the presentity, as identified by the smart name tag.

In operation, a local application 230 provides the presentity identity and the request for presence information of the presentity to the CM 220. The CM 220 accesses the directory 210 to retrieve a unique UID (network address) associated with the presentity identity from the directory 210. In one embodiment, the directory 210 is an enterprise directory, and includes the names (presentity identities) and network addresses (e.g., e-mail address or other network identifier) of each employee and networked object of the enterprise. In other embodiments, the directory 210 is a listing of subscribers to a local area network (LAN), wide area network (WAN), data network (e.g., Internet Service Provider) or other type of communication network.

The CM 220 then constructs a request for presence information 180 of the presentity to the presence server 160 using the UID. For example, in one embodiment, the CM 220 checks the local "buddy list" of the user to determine if the user has already subscribed to the presence of the presentity. If not, the CM 220 composes a subscription request message with the user's preference information and sends the subscription request message to the presence server 160 to temporarily subscribe to the presence of the presentity. If the presentity is a "buddy" of the user or if the presence server 160 grants temporary subscription to the presence of the presentity, the presence server 160 provides the requested presence information 180 of the presentity to the CM 220. The CM 220 further provides the presence information 180 received from the presence server 160 to the local application 230 that requested the presence information. The CM 220 may further provide the presence information 180, including presentity device identifiers, to the communication platforms 240 for use in establishing a communication session with the presentity.

In one embodiment, the presence information 180 of the presentity indicates the general availability of that presentity ("available" or "unavailable") for a real-time communication session with the user. In other embodiments, the presence information 180 may also include additional information, such as the presentity's availability per media type (voice, text, instant messaging or multimedia), current activity, current location, current status of active devices/applications of the presentity and other presence information.

The amount and type of presence information 180 provided to the CM 220 is dependent upon preference information 190 of both the presentity and the user. As described above, preference information 190 includes various filters in terms of privacy, prioritization, administrator policies and security considerations that operate to filter the presence information 180 provided to the CM 220. As a result, the preference information 190 of the presentity may limit the scope of presence information 180 provided to the CM 220.

For example, the presentity may want to provide calendar information (e.g., "in a meeting until 2:00," "out to lunch" or "on vacation until next Tuesday"), current location, media availability and other information to those users within the presentity's department or group, but limit the presence information 180 to a general "available" or "unavailable" per media type to those users outside of the presentity's department or group. Likewise, preference information 180 of the user may limit the scope of presence information 180 received by the CM 220. For example, the user may want presence information 180 related to the media types of voice and instant messaging (IM), but not presence information 180 related to the media type of multimedia.

The CM 220 provides the retrieved presence information 180 of the presentity to the requesting local application 230 in any type of format. For example, in one embodiment, the CM 220 provides a list of options for initiating a communication session with presentity, and the local application 230, in turn, provides this list to the user. The user utilizes the presence information 180 to initiate a communication session with the presentity via one or more communication platforms 240. For example, the user can use the presence information 180 of the presentity to determine the best time for the communication session, the preferred media type for the communication session and other factors relating to the communication session. In another embodiment, the CM 220 provides the raw presence information 180 to the local application 230, and the local application 230 formats the presence information 180 into the desired format for display to the user.

The CM 220 includes any hardware, software, firmware, or combination thereof for controlling the user environment 250. As an example, the CM 220 can include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein.

FIGURE 3 is a flowchart illustrating an exemplary process 300 for providing a presence-enhanced smart name tag, in accordance with embodiments of the present invention. At block 310, the launch of a local application running on a device is detected, and at block 320, a request for presence information of a presentity identified as a smart name tag by the local application is received. Based on the identity of the presentity, at block 330, presence information indicating availability of the presentity is requested, and at block 340, the presentity presence information is received. At block 350, the received presentity presence information is provided to the local application to enhance the smart name tag with the presence information.

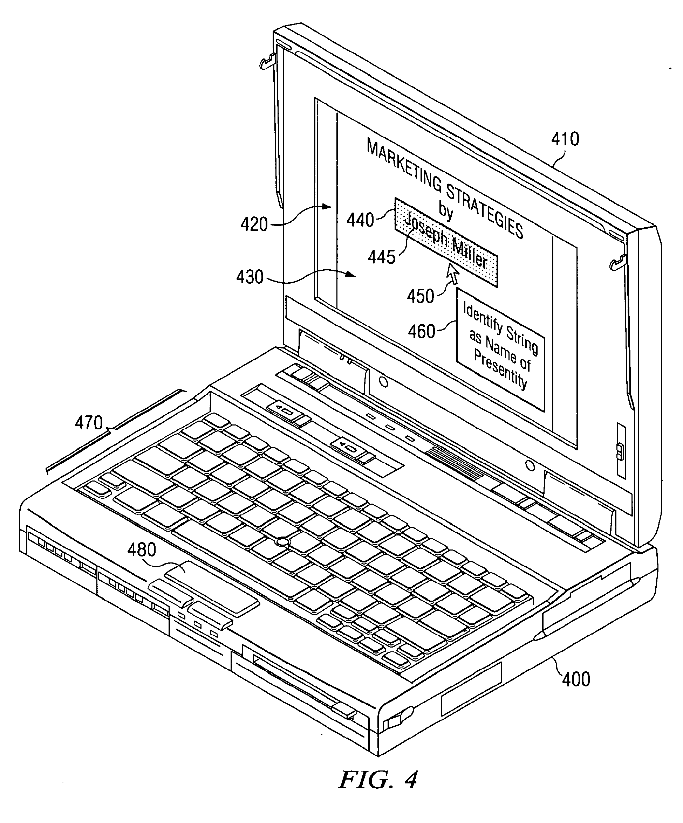

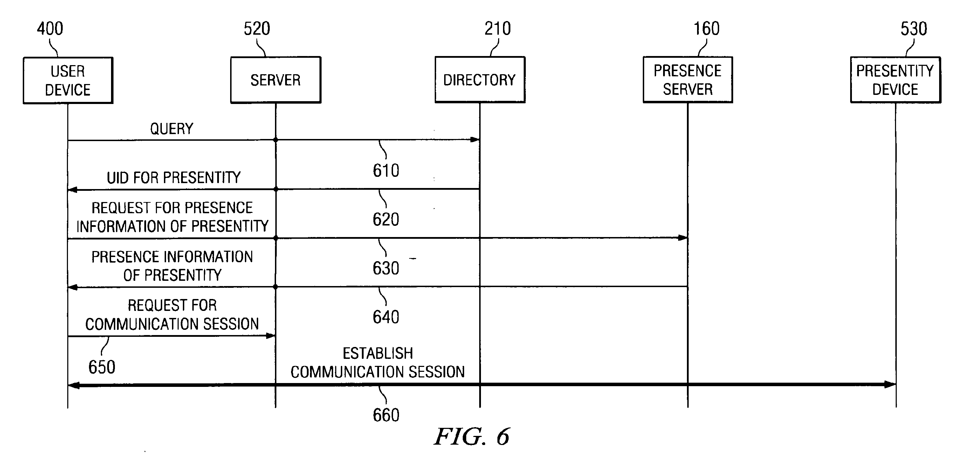

FIGURE 4 illustrates an exemplary device 400 for providing a presence-enhanced smart name tag, in accordance with embodiments of the present invention. In FIGURE 4, the device 400 is a laptop computer. However, in other embodiments, the device 400 is a personal computer, cell phone, PDA, desktop phone or other similar device. The laptop computer 400 includes a graphical user interface 420 displayed on a display 410 and input devices 470 and 480. In FIGURE 5, input device 470 is an alphanumeric keyboard and input device 480 is a touchpad. However, in other embodiments, the input device 470 and/or 480 can include one or more of a keypad, soft keyboard (e.g., touch screen), mouse, light pen or other similar device that enables a user to enter information into the device 400.

Each input device 470 and 480 is configured to receive input from a user and to display the entered input to the user through the graphical user interface 420 on the display 410. For example, in one embodiment, the input is a sequence of alphanumeric characters 445 entered into a document 430 displayed on display 410 that is automatically recognized as a smart name tag 440 by the local application in which the document 430 is opened. In another embodiment, the input is a manual command from the user via the keyboard 470 or touchpad 480 requesting that the local application identify a highlighted or otherwise identified string of characters 445 as a smart name tag 440. In a further embodiment, the input is a selected option for initiating a communication session with the presentity identified by the smart name tag based on the presence information of the presentity.

For example, as shown in FIGURE 4, the user can move a cursor 450 on the graphical user interface 420 using touchpad 480 until the cursor 450 is hovering over the string "Joseph Miller" 445 in the document 430. The local application in which the document is opened can either automatically recognize "Joseph Miller" 445 as a smart name tag 440 or the user can highlight the string "Joseph Miller" 445 and right-click on the string 445 to view one or more options 460 associated with the string 445. For example, such options can include "Cut," "Copy," "Font," "Format," and in accordance with embodiments of the present invention "Identify String as Name of Presentity." When the user selects the option "Identify String as Name of Presentity" 460, the local application recognizes the highlighted string 445 as a smart name tag 440.

Once the string 445 is identified as a smart name tag 440, the local application automatically generates a request for presence information of the presentity identified as a smart name tag 440. Similarly, the local application also generates a request for presence information for all of the other recognized smart name tags in the document 430. The local application uses the retrieved presence information to enhance the smart name tag features. Thus, when the user moves the cursor 450 over the smart name tag 440, and either hovers over the smart name tag 440 or right-clicks on the smart name tag 440, the local application presents the presence information of the presentity as various presence-enhanced options associated with the smart name tag 440 via the graphical user interface 420 on the display 410. Such presence-enhanced options may be presented to the user in any type of format.

For example, in one embodiment, the presence-enhanced options include a list of call options for initiating a communication session with the presentity (e.g., send e-mail, place call, initiate web discussion, schedule meeting, send IM, etc.). In another embodiment, the local application presents the presence-enhanced options in levels to make it easier for the user to view the options. For example, the local application can organize the presence information into presence levels, in which a first level indicates the general availability of the subscriber per media type, and subsequent levels include call options for initiating communication sessions per media type. As another example, one of the levels of presence-enhanced options can include, in addition to or in lieu of call options, general presence information of the presentity (e.g., In a meeting, Out of town, In the office, etc.), and other levels can provide further details on the presence state of the presentity to assist the user in deciding whether to initiate a communication session with the presentity. Thus, the user can use the presence information of the presentity to determine the best time for the communication session, the preferred media type for the communication session and other factors relating to the communication session.

Referring now to FIGURE 5, there is illustrated an exemplary communications system 500 incorporating a presence system for implementing a presence-enhanced smart name tag, in accordance with embodiments of the present invention. In FIGURE 5, a single user device 400 is depicted, which includes local application 230 and the CM 220. As described above in connection with FIGURE 2, the CM 220 is configured to detect launch of the local application 230 and to receive a request from the local application 230 for presence information of a presentity 530 identified as a smart name tag by the local application (either automatically or manually).

The CM 220 accesses a directory 210 via a telephony server 520 and a communication network 510 to retrieve from the directory 210 a unique UID (network address) associated with the presentity identity. Telephony server 520 represents any telephony server, such as a circuit switch, IP router, gateway or other device that is capable of routing messages and/or communication sessions between the user device 400 and the presentity 530. In addition, the communication network 51 represents any type of network over which media (circuit-switched or packet-switched voice or data) may be sent.

Upon receiving the UID, the CM 220 generates a request for presence information of the presentity 530 and transmits the request for presence information to the presence server 160 via the telephony server 520 and communication network 510. The CM 220 further provides the retrieved presence information to the local application 230 that requested the presence information for use in enhancing the smart name tag with the retrieved presence information. For example, the presence information can be used to provide a list of options for initiating a communication session between the user device 400 and the presentity 530. Although the telephony server 520 is shown in the communication paths between the communication network 510 and the directory 210, presence server 160 and presentity 530, in other embodiments, the telephony server 520 need not be in all communication paths.

FIGURE 6 is a signal flow diagram illustrating an exemplary communication session flow using a presence-enhanced smart name tag, in accordance with embodiments of the present invention. In FIGURE 6, at step 610, the user device 400 queries the directory 210 via telephony server 520 to retrieve the UID for the presentity 530, at step 620. Thereafter, at step 630, the user device 400 sends a request for presence information for the presentity 530 to the presence server 160. At step 640, the presence server 160 provides to the user device 400 via the telephony server 520 the requested presence information for the presentity 530, which can be presented on the user device 400 as call options for initiating a communication session with the presentity 530. For example, the user device 400 may display one or more of the following call options: Instant Message, Mobile Phone, Desktop Phone, Text Message, Multimedia/Video and Voice Mail.

From the displayed call options, the user selects one of the call options, and at step 650, the selected call option is transmitted to the telephony server 520 as a request for a communication session with the presentity 530. The telephony server 520 uses the selected call option to establish a communication session between the user device 400 and the presentity 530.

The following system as well as the following features, separately or in any combination, may also constitute advantageous embodiments of the described or claimed invention:
- The claimed and/or described device, wherein said local application is a document application;
- The claimed and/or described device, wherein said local application is further operable to open a document containing said smart name tag;
- The claimed and/or described device, wherein said local application is capable of automatically identifying said string of characters as said smart name tag;
- A communication system for providing a presence-enhanced smart name tag, comprising: a device running a local application configured to identify a string of characters as a smart name tag, said string of characters representing an identity of a select presentity, said device being operable to generate a request for presence information of said select presentity; and a presence server for collecting and storing said presence information on a plurality of presentities including said select presentity; wherein said presence server is operable to provide said presence information of said select presentity to said device to enhance said smart name tag with said presence information, said presence information indicating availability of said select presentity;
- The claimed and/or described communication system, further comprising: a directory of presentities; wherein said device is further operable to query said directory with said identity of said select presentity to retrieve a network address for said select presentity and to retrieve said presence information of said select presentity from said presence server using said network address;
- The claimed and/or described communication system, wherein said device is further operable to generate a subscription message with said network address to said presence server to temporarily subscribe to presence services of said select presentity;
- The claimed and/or described communication system, wherein said device is further operable to establish a communication session with said select presentity using said presence information;
- The claimed and/or described communication system, further comprising: a telephony server connected to receive a request for said communication session from said device and to establish said communication session between said select presentity and said device;
- The claimed and/or described communication system, wherein said communication session is a real-time communication session or a non-real-time communication session;
- The claimed and/or described communication system, wherein said presence server further maintains preference information for each of said presentities, said preference information filtering said presence information of said select presentity provided to said device;
- The claimed and/or described method, further comprising the step of: generating a subscription message with said network address to temporarily subscribe to presence services of said presentity.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A device (400) for providing a presence-enhanced smart name tag, comprising:
a local application (230) capable of identifying a string of characters (445) as a smart name tag (440), said string of characters (445) representing an identity of a presentity (530), said local application (230) being operable to generate a request for presence information (180) of said presentity (530), said presence information (180) indicating availability of said presentity (530); and
a communication manager (220) operable to detect launch of said local application (230), retrieve said presence information (180) of said presentity (530) from a presence system (100) and provide said presence information (180) to said local application (230) to enhance said smart name tag (440) with said presence information (180).

2. The device (400) of Claim 1, wherein said communication manager (220) is further operable to publish launch of said local application (230) to said presence system (100).

3. The device (400) of Claim 1, wherein said communication manager (220) is further operable to query a directory (210) with said identity of said presentity (530) to retrieve a network address for said presentity (530) and to retrieve said presence information (180) of said presentity (530) from said presence system (100) using said network address.

4. The device (400) of Claim 3, wherein said communications manger (220) is further operable to generate a subscription message with said network address to said presence system (100) to temporarily subscribe to presence services of said presentity (530).

5. The device (400) of Claim 1, wherein said local application (230) is capable of receiving a manual command to identify of said string of characters (445) as said smart name tag (440).

6. The device (400) of Claim 1, further comprising:
a display (410);
a graphical user interface (420) operable to provide said smart name tag (440) to a user on said display (410) and to provide options associated with said presence information (180) of said presentity (530) to said user on said display (410); and
an input device (470 or 480) configured to receive input from said user selecting one of said options.

7. The device (400) of Claim 1, wherein said communication manager (220) is further operable to establish a communication session with said presentity (530) using said presence information (180).

8. A method for providing a presence-enhanced smart name tag, comprising the steps of:
detecting (310) launch of a local application (230) running on a device (400);
receiving (320) a request for presence information (180) of a presentity (530) identified as a smart name tag (440) by said local application (230);
requesting (330) said presence information (180) of said presentity (530), said presence information (180) indicating availability of said presentity (530);
receiving (340) said presence information (180) of said presentity (530); and
providing (350) said presence information (180) of said presentity (530) to said local application (230) to enhance said smart name tag (440) with said presence information (180).

9. The method of Claim 8, further comprising the step of:
querying a directory (210) with a string of characters (445) identified as said smart name tag (440) to retrieve a network address for said presentity (530), said string of characters (445) representing an identity of said presentity (530); and wherein said step of requesting (330) said presence information (180) further includes requesting said presence information (180) of said presentity (530) using said network address.

10. The method of Claim 8, further comprising the step of:
establishing a communication session with said presentity (530) using said presence information (180).
